# EUROPÄISCHE PATENTSCHRIFT

(11) **EP 1 796 519 B1**
(45) Veröffentlichungstag und Bekanntmachung des Hinweises auf die Patenterteilung: **19.03.2008**
(21) Anmeldenummer: 05777976.1
(22) Anmeldetag: 09.08.2005
(51) Int. Cl.: A47J 43/07

(54) **HAUSHALTSGERÄT MIR RAST- UND GEGENRASTMITTELN**
HOUSEHOLD DEVICE COMPRISING LOCKING AND COUNTER-LOCKING MEANS
APPAREIL MENAGER COMPORTANT DES ELEMENTS D'ARRET ET DES CONTRE-ELEMENTS D'ARRET

(30) Priorität: 31.08.2004 DE 102004042086
(43) Veröffentlichungstag der Anmeldung: 20.06.2007
(73) Patentinhaber: BSH Bosch und Siemens Hausgeräte GmbH, 81739 München (DE)
(72) Erfinder: DELOPST, Matjaz, 3326 Topolsica (SI); LESKOVSEK, Peter, 3333 Ljubno ob Savinji (SI); OGRIZEK, Darko, 3320 Velenje (SI); POGACAR, Toni, 3311 Sempeter (SI); SEDOVSEK, Aleksander, 3330 Mozirje (SI)
(86) Internationale Anmeldenummer: PCT/EP2005/053918
(87) Internationale Veröffentlichungsnummer: WO 2006/024594

(56) Entgegenhaltungen:
- EP-A- 1 138 238
- DE-A1- 10 142 508
- US-A- 4 074 584
- US-A1- 2002 018 398
- US-A1- 2003 070 565

## Beschreibung

Die Erfindung betrifft ein Haushaltsgerät mit einem ersten Gehäuseteil, das mindestens ein Rastmittel aufweist und einem zweiten Gehäuseteil, das mindestens ein Gegenrastmittel aufweist, welche Rast- und Gegenrastmittel zur Verbindung der Gehäuseteile ausgebildet sind und Sicherungsmittel vorgesehen sind, durch die das mindestens eine Rastmittel gegen Lösen von dem mindestens einen Gegenrastmittel gesichert ist.

Aus DE 101 42 508 A1 ist eine Rastvorrichtung zum Befestigen eines ersten Körpers bekannt, der in einen zweiten Körper hineinsteckbar ist, wobei eine erste Wand des ersten Körpers sich im wesentlichen im rechten Winkel zu einer zweiten Wand des zweiten Körpers erstreckt, mit einem Rastvorsprung, der auf einer von dem zweiten Körper umschlossenen Innenseite der ersten Wand angeordnet ist, und der durch eine von einem mit dem ersten Körper verbundenen Verbindungsmittel ausgeübte Kraft in eine Rastöffnung hineindrückbar ist. Als Sicherungsmittel ist für jede Rast- und Gegenrastmittelverbindung eine Schraube vorgesehen, durch die ein Lösen des Rastmittels von dem Gegenrastmittel verhindert ist.

Nachteilig bei der Rastvorrichtung aus dem Stand der Technik ist es jedoch, dass die Montage der Gehäuseteile bzw. der Rast- und Gegenrastmittelverbindung einerseits für den Hersteller aufwendig ist und andererseits eine unerwünschte, insbesondere zerstörungsfreie Demontage beispielsweise durch den Endbenutzer in einfacher Weise möglich ist.

Aufgabe der Erfindung ist es, die Montage der Gehäuseteile mit einer gattungsgemäßen Rastvorrichtung für den Hersteller zu vereinfachen. Weiterhin soll eine unerwünschte Demontage beispielsweise durch den Endbenutzer erschwert bzw. nachweisbar sein.

Vorzugsweise soll eine Demontage für die Rast- und Gegenrastmittelverbindung in zerstörungsfreier Weise und für die Sicherungsmittel in zerstörender Weise ermöglicht sein.

Erfindungsgemäß wird diese Aufgabe dadurch gelöst, dass das Sicherungsmittel mindestens ein einen Presssitz bildendes Verbindungsmittel ist.

Aufgrund der Ausbildung des Verbindungsmittel als Presssitz wird das Sicherungsmittel durch das einrastende Zusammenfügen der Gehäuseteile aktiviert, d.h. das Verbindungsmittel verbunden. In der zusammengefügten Lage von erstem und zweitem Gehäuseteil sind die Rastmittel mit den Gegenrastmitteln verrastet. Ein Lösen der Rastmittel von den Gegenrastmitteln ist dadurch verhindert, dass das einmal zusammengefügte Verbindungsmittel durch den festsitzenden Presssitz nicht ohne seiner Zerstörung wieder gelöst werden kann. Die zusammengefügten Verbindungsmittel halten die beiden Gehäuseteile derart zusammen, dass die Rastmittel sich nicht von den Gegenrastmittel lösen können. Eine Trennung der beiden Gehäuseteile ist nur dann möglich, wenn das Verbindungsmittel zerstört wird. Ist das Verbindungsmittel oder die mehreren Verbindungsmittel einmal zerstört, so können in einer Ausgestaltung der Erfindung die Rastmittel auch ohne ihrer Zerstörung von den Gegenrastmittel getrennt werden. Der Vorteil darin besteht in der Tatsache, dass zwei zusammengefügte Gehäuseteile nach ihrer Trennung erneut zusammengefügt werden können und die unversehrt gebliebenen Rastmittel in Zusammenwirken mit den unversehrt gebliebenen Gegenrastmitteln die beiden Gehäusehälften wieder zuverlässig zusammenhalten, auch wenn die Funktion der Sicherungsmittel nicht mehr gewährleistet ist. Dieser Umstand ermöglicht es, einmal demontierte Gehäuseteile wieder verwenden zu können, ohne diese durch neue Gehäuseteile ersetzen zu müssen.

Alternativ kann jedoch auch vorgesehen sein, dass die Rastmittel und die Gegenrastmittel so gestaltet sind, dass sie bei einem Versuch die beiden Gehäuseteile wieder zu trennen, zerstört werden. Dadurch wird verhindert, dass Gehäuseteile, deren Sicherungsmittel bereits zerstört sind nochmals verwendet werden. Ohne funktionierende Rastmittel und Gegenrastmittel können die Gehäusehälften nicht zusammen gehalten werden. Es wird damit sichergestellt, das nach eine Demontage des Gehäuses stets neue Gehäusehälften verwendet werden.

Es kann entweder ein einziges Verbindungsmittel zwischen erstem und zweitem Gehäuseteil oder es können eine Vielzahl von Verbindungsmitteln vorgesehen sein. Das mindestens eine Verbindungsmittel kann vorzugsweise einen am ersten Gehäuseteil vorgesehenen Stift aufweisen, der in eine am zweiten Gehäuseteil vorgesehene Stiftaufnahme eingepresst ist. Durch den eingepressten Sitz des Stifts in der Stiftaufnahme wird eine kraftschlüssige Verbindung geschaffen. Als Stift kann jedes geeignet geformte sich länglich erstreckende Mittel angesehen werden, das in einen Körper d.h. in die Stiftaufnahme einsteckbar ist, so dass dieses Mittel aufgrund der Reibkraft zwischen der Außenfläche des länglichen Mittels und der Innenfläche des Körpers in diesem festgehalten ist. Gängige Mittel sind Pressstifte, die in eine Nabe eingepresst sind.

Vorzugsweise weist der Stift einen kreisförmigen Querschnitt und die Stiftaufnahme eine hohlzylindrische Innenwand auf. So wird bei geringster Baugröße von Stift und Stiftaufnahme die größtmögliche Berührfläche zwischen Stift und Stiftaufnahme geschaffen. Der Stift kann jedoch auch andere Querschnittsformen, wie beispielsweise einen dreieckigen, quadratischen, rechteckigen oder sternförmigen Querschnitt aufweist. Die Stiftaufnahme ist zu dem Querschnitt des zugehörigen Stiftes konform ausgebildet, kann also auch eine dreieckige, quadratische, rechteckige oder sternförmige Kontur aufweisen.

Für einen ausreichenden Presssitz ist der Querschnitt des Stiftes geringfügig größer als der zugeordnete Querschnitt der Stiftaufnahme. Der kreisförmige Querschnitt des Stiftes weist somit einen geringfügig größeren Durchmesser als die hohlzylindrische Innenwand der Stiftaufnahme auf.

In vorteilhafter Weise wird die Stiftaufnahme von röhrchenförmigen Ansätzen an einer Innenwand des zweiten Gehäuseteils gebildet. Ist das Gehäuse aus Kunststoff hergestellt so können die Stifte bzw. die Stiftaufnahmen an ihren jeweils zugeordneten Gehäuseteilen angeformt sein. Das Anformen erfolgt kostengünstig vorzugsweise im Kunststoffspritzgussverfahren. Die Stifte und Stiftaufnahmen können jedoch auch nachträglich angeformt bzw. angeklebt oder angelötet, angeschweißt werden. Ein Löten oder Schweißen kann insbesondere dann angewendet werden, wenn die Gehäuseteile aus Metall oder Aluminium hergestellt sind.

Bevorzugt weist der Stift einen Anschlag auf, der in einem montierten Zustand von erstem und zweitem Gehäuseteil an einem Gegenanschlag an der Stiftaufnahme anliegt. Durch Anschlag und Gegenanschlag ist sichergestellt, dass die Gehäuseteile in einem vorgegebenem Abstand zueinander montiert sind. Insbesondere ist sichergestellt, dass bei einem Fügevorgang der Gehäuseteile die Grundfläche im Inneren der Stiftaufnahme nicht gegen die Stirnseite des freien Endes des Stiftes drückt. So bleibt der Stift frei von axialen Druckkräften und auch die Grundfläche im Inneren der Stiftaufnahme wird nicht von dem Stift von Innen nach außen gedrückt, was beispielsweise bei Kunststoffgehäuseteilen optisch unschöne Verformungen sichtbar machen würde.

Der Anschlag kann durch eine kegelstumpfförmige Durchmessererweiterung des Stiftes gebildet werden. Vorzugsweise ist dabei das Gegenanschlagelement eine hohlkegelstumpfförmige Durchmesserverengung der Stiftaufnahme. Anschlag und Gegenanschlagelement bilden dadurch einen Kegelsitz zwischen Stift und Stiftaufnahme, der einen sicheren und zentrierten Sitz des Stiftes in der Stiftaufnahme gewährleistet.

Jeder Rast- und Gegenrastmittelverbindung kann ein gesondertes Verbindungsmittel zugeordnet sein. Mindestens sollte jeder Rast- und Gegenrastmittelverbindung eine einziges Verbindungsmittel zugeordnet sein. Es können aber auch jeder Rast- und Gegenrastmittelverbindung jeweils zwei oder mehrere Verbindungsmittel zugeordnet sein. Nur in Ausnahmefällen kann es ausreichend sein dass weniger Verbindungsmittel als Rast- und Gegenrastmittelverbindungen vorgesehen werden.

In der bevorzugten Ausgestaltung der Erfindung sind das erste und zweite Gehäuseteil zwei schalenartige Gehäusehälften eines Stabmixers oder Handrührers. Dabei sind vorzugsweise sechs Rast- und Gegenrastmittelverbindungen mit jeweils einem zugeordneten Verbindungsmittel vorgesehen. Jeweils zwei Rast- und Gegenrastmittelverbindungen sind an einem oberen Ende des Stabmixers vorgesehen. Jeweils zwei weitere Rast- und Gegenrastmittelverbindungen sind an einem unteren Ende des Stabmixers vorgesehen. Die letzten beiden der sechs Rast- und Gegenrastmittelverbindungen sind etwa in mittlerer Höhe des Stabmixers vorgesehen. Die Rastmittel können beispielsweise als elastische Federzungen ausgebildet sein, die Durchbrüche aufweisen, in die als Rasthaken ausgebildete Gegenrastmittel eingreifen. Beispielsweise können an einer Federzunge zwei oder drei parallel zueinander verlaufende Durchbrüche vorgesehen sein, in die eine entsprechende Anzahl von zwei oder drei Rasthaken eingreifen.

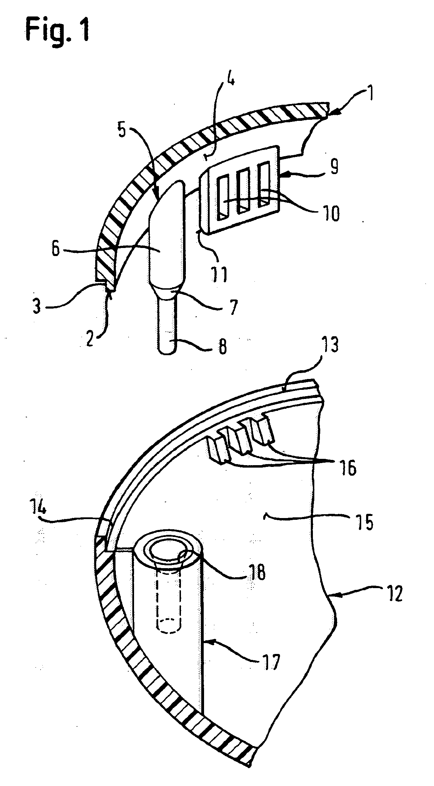

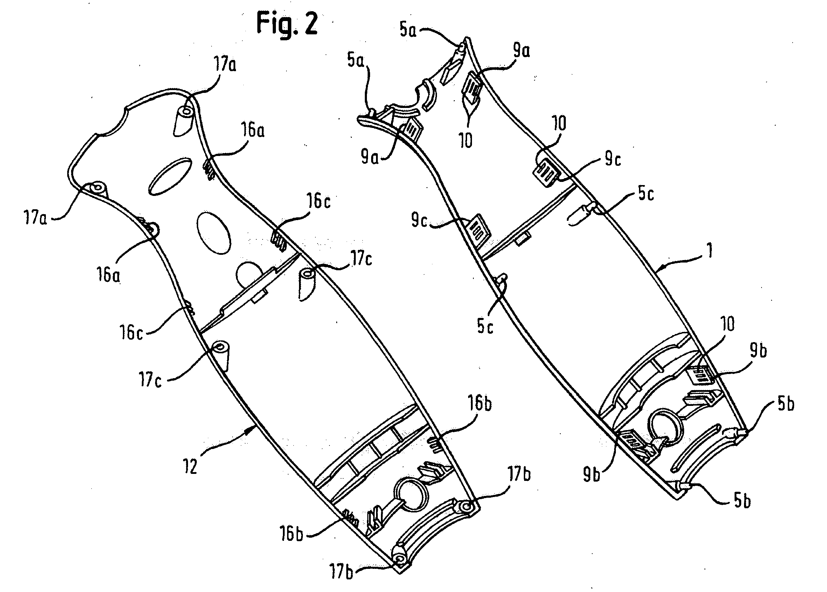

Ein Ausführungsbeispiel der Erfindung ist im folgenden anhand der Figuren 1 und 2 näher erläutert.

Es zeigen:
- Figur 1: eine Teilschnittdarstellung eines erfindungsgemäßen Sicherungsmittels für eine Rast- und Gegenrastmittelverbindung;
- Figur 2: zwei Gehäusehälften eines Stabmixers mit sechs Sicherungsmitteln für zugeordnete Rast- und Gegenrastmittelverbindung analog Figur 1.

In der Figur 1 ist ein Ausbruch eines ersten Gehäuseteils 1 in perspektivischer Ansicht gezeigt. Eine Kante 2 des ersten Gehäuseteils 1 trägt eine sich entlang der Kante erstreckende Dichtstufe 3. An einer Innenwand 4 des ersten Gehäuseteils 1 ist ein Stift 5 angeformt. Der Stift 5 weist einen an die Innenwand 4 des ersten Gehäuseteils 1 angeformten Sockelteil 6 auf. An den Sockelteil 6 schließt sich ein kegelstumpfförmiger Anschlag 7 an. Die Stirnfläche des kegelstumpfförmigen Anschlags 7 mit dem größeren Durchmesser ist zum Sockelteil 6 hin gerichtet und die Stirnfläche des kegelstumpfförmigen Anschlags 7 mit dem kleineren Durchmesser ist zu einem freien Ende 8 des Stiftes 5 hin gerichtet. Nahe dem Stift 5 ist ein Rastmittel 9 vorgesehen. Das Rastmittel 9 ist an die Innenwand 4 des ersten Gehäuseteils 1 angeformt. Das Rastmittel 9 ist zungenförmig ausgebildet und vorzugsweise mit einer rechteckigen Kontur versehen. Das Rastmittel 9 weist drei parallel in einem Abstand zueinander verlaufender Durchbrüche 10 auf. Ein freies Ende des Rastmittels 9 weist eine angefasste Querkante 11 auf.

Ein zweites Gehäuseteil 12 weist eine zweite Kante 13 auf, die mit einer zur Dichtstufe 3 des ersten Gehäuseteils 1 korrespondierende zweite Dichtstufe 14 trägt. An einer Innenwand 15 des zweiten Gehäuseteils 12 sind drei parallel in Abstand zueinander angeordnete Gegenrastmittel 16 vorgesehen. Die Gegenrastmittel 16 sind zu den Durchbrüchen 10 am Rastmittel 9 korrespondierend ausgebildet. An der Innenwand 15 ist eine Stiftaufnahme 17 angeformt. Die Stiftaufnahme ist rohrförmig ausgebildet und trägt an seinem stirnseitigen freien Ende ein kegelstumpfförmiges Gegenanschlagelement 18.

Die Oberfläche des Gegenanschlagelements 18 ist zu der Oberfläche des Anschlags 7 konform gestaltet.

Figur 2 zeigt zwei Gehäusehälften eines Stabmixers. Das erste Gehäuseteil 1 trägt sechs Rastmittel 9 und sechs Stifte 5. Zwei Rastmittel 9a sind an einem oberen Ende des Stabmixers vorgesehen. Jeweils zwei weitere Rastmittel 9b sind an einem unteren Ende des Stabmixers vorgesehen. Die letzten beiden der sechs Rastmittel 9c sind etwa in mittlerer Höhe des Stabmixers vorgesehen. Die Rastmittel sind als elastische Federzungen ausgebildet, die die Durchbrüche 10 aufweisen. Jedem der zwei Rastmittel 9a ist ein Stift 5a zugeordnet. Jedem der zwei Rastmittel 9b ist ein Stift 5b zugeordnet. Jedem der zwei Rastmittel 9c ist ein Stift 5c zugeordnet.

Das zweite Gehäuseteil 12 trägt sechs Gegenrastmittel 16 und sechs Stiftaufnahmen 17. Zwei Gegenrastmittel 16a sind an einem oberen Ende des Stabmixers vorgesehen. Jeweils zwei weitere Gegenrastmittel 16b sind an einem unteren Ende des Stabmixers vorgesehen. Die letzten beiden der sechs Gegenrastmittel 16c sind etwa in mittlerer Höhe des Stabmixers vorgesehen. Die Rastmittel sind als elastische Federzungen ausgebildet, die die Durchbrüche 10 aufweisen.

Jedem der zwei Gegenrastmittel 16a ist ein Stiftaufnahmen 17a zugeordnet. Jedem der zwei Gegenrastmittel 16b ist ein Stiftaufnahmen 17b zugeordnet. Jedem der zwei Gegenrastmittel 16c ist ein Stiftaufnahmen 17c zugeordnet.

Im montierten Zustand des ersten Gehäuseteils 1 und des zweiten Gehäuseteils 12 sind die Stifte 5a in die Stiftaufnahmen 17a eingesteckt. Die Stifte 5b in die Stiftaufnahmen 17b eingesteckt und die Stifte 5c in die Stiftaufnahmen 17c eingesteckt. Dabei verrasten die Rastmittel 9a in den Durchbrüchen 10 der Gegenrastmittel 16a, die Rastmittel 9b in den Durchbrüchen 10 der Gegenrastmittel 16b und die Rastmittel 9c in den Durchbrüchen 10 der Gegenrastmittel 16c.

## Patentansprüche

1. Haushaltsgerät mit einem ersten Gehäuseteil (1), das mindestens ein Rastmittel (9) aufweist und einem zweiten Gehäuseteil (12), das mindestens ein Gegenrastmittel (16) aufweist, welche Rastmittel (9) und Gegenrastmittel (16) zur Verbindung der Gehäuseteile (1, 12) ausgebildet sind und Sicherungsmittel vorgesehen sind, durch die das mindestens eine Rastmittel (9) gegen Lösen von dem mindestens einen Gegenrastmittel (16) gesichert ist, **dadurch gekennzeichnet, dass** das Sicherungsmittel mindestens ein einen Presssitz bildendes Verbindungsmittel ist.

2. Haushaltsgerät nach Anspruch 1, **dadurch gekennzeichnet, dass** das mindestens eine Verbindungsmittel einen am ersten Gehäuseteil (1) vorgesehenen Stift (5) aufweist, der in eine am zweiten Gehäuseteil (12) vorgesehene Stiftaufnahme (17) eingepresst ist.

3. Haushaltsgerät nach Anspruch 2, **dadurch gekennzeichnet, dass** der Stift (5) einen kreisförmigen Querschnitt und die Stiftaufnahme (17) eine hohlzylindrische Innenwand aufweist.

4. Haushaltsgerät nach Anspruch 3, **dadurch gekennzeichnet, dass** der kreisförmige Querschnitt des Stiftes (5) einen geringfügig größeren Durchmesser als die hohlzylindrische Innenwand der Stiftaufnahme (17) aufweist.

5. Haushaltsgerät nach einem der Ansprüche 2 bis 4, **dadurch gekennzeichnet, dass** die Stiftaufnahme (17) von röhrchenförmigen Ansätzen an einer Innenwand (15) des zweiten Gehäuseteils (12) gebildet wird.

6. Haushaltsgerät nach einem der Ansprüche 2 bis 5, **dadurch gekennzeichnet, dass** der Stift (5) einen Anschlag (7) aufweist, der in einem montierten Zustand von erstem Gehäuseteil (1) und zweitem Gehäuseteil (12) an einem Gegenanschlagelement (18) an der Stiftaufnahme (17) anliegt.

7. Haushaltsgerät nach Anspruch 6, **dadurch gekennzeichnet, dass** der Anschlag (7) durch eine kegelstumpfförmige Durchmessererweiterung des Stiftes (5) gebildet wird.

8. Haushaltsgerät nach Anspruch 6 oder 7, **dadurch gekennzeichnet, dass** das Gegenanschlagelement (18) eine hohlkegelstumpfförmige Durchmesserverengung der Stiftaufnahme (17) ist.

9. Haushaltsgerät nach einem der Ansprüche 1 bis 8, **dadurch gekennzeichnet, dass** jeder Rastmittel (9)- und Gegenrastmittel (16)-Verbindung ein gesondertes kraftschlüssiges Verbindungsmittel zugeordnet ist.

10. Haushaltsgerät nach einem der vorhergehenden Ansprüche, **dadurch gekennzeichnet, dass** das erste Gehäuseteil (1) und das zweite Gehäuseteil (12) zwei schalenartige Gehäusehälften eines Stabmixers oder Handrührers sind.

## Claims

1. Domestic appliance with a first housing part (1), which has at least one detent means (9), and a second housing part (12), which has at least one counter-detent means (16), which detent means (9) and counter-detent means (16) are constructed for connection of the housing parts (1, 12) and securing means are provided by which the at least one detent means (9) is secured against detaching from the at least one counter-detent means (16), **characterised in that** the securing means is at least one connecting means forming a press seat.

2. Domestic appliance according to claim 1, **characterised in that** the at least one connecting means comprises a pin (5) which is provided at the first housing part (1) and which is pressed into a pin receptacle (17) provided at the second housing part (12).

3. Domestic appliance according to claim 2, **characterised in that** the pin (5) has a circular cross-section and the pin receptacle (17) has a hollow-cylindrical inner wall.

4. Domestic appliance according to claim 3, **characterised in that** the circular cross-section of the pin (5) has a slightly larger diameter than the hollow-cylindrical inner wall of the pin receptacle (17).

5. Domestic appliance according to one of claims 2 to 4, **characterised in that** the pin receptacle (17) is formed by tubelet-shaped attachments at an inner wall (15) of the second housing part (12).

6. Domestic appliance according to one of claims 2 to 5, **characterised in that** the pin (5) has an abutment (7) which in a mounted state of the first housing part (1) and second housing part (12) bears against a counter-abutment element (18) at the pin receptacle (17).

7. Domestic appliance according to claim 6, **characterised in that** the abutment (7) is formed by a frusto-conical enlargement of the diameter of the pin (5).

8. Domestic appliance according to claim 6 or 7, **characterised in that** the counter-abutment element (18) is a hollow frusto-conical narrowing of the diameter of the pin receptacle (17).

9. Domestic appliance according to one of claims 1 to 8, **characterised in that** a special force-locking connecting means is associated with each detent means (9) and counter-detent means (16) connection.

10. Domestic appliance according to one of the preceding claims, **characterised in that** the first housing part (1) and the second housing part (12) are two shell-shaped housing halves of a rod mixer or hand stirrer.

## Revendications

1. Appareil ménager comprenant une première partie de boîtier (1) qui présente au moins un moyen d'arrêt (9) et une seconde partie de boîtier (12) qui présente au moins un moyen de contre-arrêt (16), lesdits moyen d'arrêt (9) et moyen de contre-arrêt (16) étant réalisés pour relier les parties de boîtier (1, 12) et des moyens de sûreté étant prévus, à l'aide desquels le au moins un moyen d'arrêt (9) est assuré contre un détachement par le au moins un moyen de contre-arrêt (16), **caractérisé en ce que** le moyen de sûreté est au moins un moyen de liaison formant un ajustement sans jeu.

2. Appareil ménager selon la revendication 1, **caractérisé en ce que** le au moins un moyen de liaison présente une goupille (5) prévue sur la première partie de boîtier (1) et qui est pressée dans un logement de goupille (17) prévu sur la seconde partie de boîtier (12).

3. Appareil ménager selon la revendication 2, **caractérisé en ce que** la goupille (5) présente une section transversale circulaire et **en ce que** le logement de goupille (17) présente une paroi intérieure cylindrique creuse.

4. Appareil ménager selon la revendication 3, **caractérisé en ce que** la section transversale circulaire de la goupille (5) présente un diamètre légèrement plus grand que la paroi intérieure cylindrique creuse du logement de goupille (17).

5. Appareil ménager selon l'une des revendications 2 à 4, **caractérisé en ce que** le logement de goupille (17) est formé par des appendices tubulaires sur une paroi intérieure (15) de la seconde partie de boîtier (12).

6. Appareil ménager selon l'une des revendications 2 à 5, **caractérisé en ce que** la goupille (5) présente une butée (7) qui vient s'appliquer contre un élément de contre-butée (18) sur le logement de goupille (17) dans un état monté de la première partie de boîtier (1) et de la seconde partie de boîtier (12).

7. Appareil ménager selon la revendication 6, **caractérisé en ce que** la butée (7) est formée par une extension de diamètre en forme de tronc de cône de la goupille (5).

8. Appareil ménager selon la revendication 6 ou 7, **caractérisé en ce que** l'élément de contre-butée (18) est un rétrécissement de diamètre en forme de tronc de cône creux du logement de goupille (17).

9. Appareil ménager selon l'une des revendications 1 à 8, **caractérisé en ce qu'**un moyen de liaison par coopération de forces séparé est attribué à chaque liaison de moyen d'arrêt (9) et de moyens de contre-arrêt (16).

10. Appareil ménager selon l'une quelconque des revendications précédentes, **caractérisé en ce que** la première partie de boîtier (1) et la seconde partie de boîtier (12) sont deux moitiés de boîtier en forme de coque d'un mixeur à tige ou d'un agitateur manuel.
